(19) Europäisches Patentamt / European Patent Office / Office européen des brevets

(11) **EP 3 671 392 B1**

(12) **FASCICULE DE BREVET EUROPEEN**

(45) Date de publication et mention de la délivrance du brevet:
**30.10.2024 Bulletin 2024/44**

(21) Numéro de dépôt: **19216280.8**

(22) Date de dépôt: **13.12.2019**

(51) Classification Internationale des Brevets (IPC):
**G05D 1/00** *(2024.01)*

(52) Classification Coopérative des Brevets (CPC):
**G05D 1/0005; G06N 3/045; G06N 20/20; G08G 5/0021; G08G 5/0052;** G06N 3/044; G06N 3/047; G06N 3/084; G06N 5/01; G06N 7/01; G06N 20/10

(54) **APPRENTISSAGE AUTOMATIQUE EN AVIONIQUE**

MASCHINELLES LERNEN IN DER LUFTFAHRTTECHNIK

AUTOMATIC LEARNING IN AVIONICS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **20.12.2018 FR 1873514**

(43) Date de publication de la demande:
**24.06.2020 Bulletin 2020/26**

(73) Titulaire: **Thales**
**92400 Courbevoie (FR)**

(72) Inventeurs:
• **PIERRE, Christophe**
**31100 TOULOUSE (FR)**
• **MARTINEZ, Dorian**
**3100 TOULOUSE (FR)**
• **CRETE, Bastien**
**31100 TOULOUSE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
US-A1- 2009 112 535    US-A1- 2016 314 692
US-A1- 2018 259 342    US-B1- 9 542 851

## Description

### Domaine de l'invention

L'invention concerne le domaine de l'avionique en général. L'invention concerne en particulier des procédés et des systèmes pour prédire l'état futur d'un aéronef.

### Etat de la Technique

Les approches connues de l'état de la technique (e.g. WO 2017042166, ou US9290262) s'appuient généralement sur un jeu de données *modélisant* les performances d'un aéronef.

Différentes approches sont connues pour la modélisation des performances avion. Des travaux comme « BADA » (acronyme de « *Base of Aircraft Data* » en anglais) ou «*safety-line* » par EUCASS (« *European Conference for Aeronautics and Space Sciences*») présentent des limitations. Le modèle BADA est limité en termes de poussée et de traînée. Le modèle EUCASS ne s'applique qu'aux avions propulsés par turboréacteurs (i.e. pilotés en N1).

Les problèmes techniques en aéronautique font généralement intervenir beaucoup de paramètres différents et les optimisations développées actuellement convergent alors peu, mal ou pas du tout. Cette absence de convergence (ou de convergence vers des minimas locaux) s'observe en effet fréquemment lorsque les processus modélisés sont de grandes dimensions (et suivent des modèles différents en fonction des points d'observation).

Les approches fondées sur des modèles intégrant des équations physiques de l'aéronef sont généralement dépendantes de la qualité de la modélisation et de la connaissance du comportement réel de l'aéronef. De fait, ces méthodes ne sont généralement pas robustes à la variabilité du comportement *réel* de chaque aéronef, comparé à celui d'un aéronef « moyen » (modélisé).

Les références suivantes abordent des solutions pour prédire l'état futur d'un aéronef : US 9 542 851 B1 (KIM GEUN IL [US] ET AL) 10 janvier 2017 ; US 2018/259342 A1 (BITRA SURESH KUMAR [IN] ET AL) 13 septembre 2018 ; US 2009/112535 A1 (PHILIPPS JAMES D [US]) 30 avril 2009 ; US 2016/314692 A1 (BAHRAMI ALI [US] ET AL) 27 octobre 2016.

Il existe cependant un besoin industriel pour des procédés et des systèmes avancés pour l'optimisation de tout ou partie des opérations d'un aéronef.

### Résumé de l'invention

Le document concerne des systèmes et des procédés pour la gestion du vol d'un aéronef, comprenant les étapes consistant à recevoir des données (200) issues d'enregistrements du vol d'un aéronef; lesdites données comprenant des données issues de capteurs et/ou des données issues de l'avionique embarquée ; déterminer l'état avion à un point N (220) à partir des données reçues (200); déterminer l'état de l'avion au point N+l (240) à partir de l'état de l'avion au point N (220), par application d'un modèle appris par apprentissage automatique (292). Des développements décrivent l'utilisation des paramètres de vol SEP, FF et N1 ; d'apprentissage automatique non supervisé, hors-ligne et/ou en ligne, selon une variété d'algorithmes et de réseaux de neurones. Des aspects de logiciel sont décrits.Il est décrit un procédé pour la gestion du vol d'un aéronef, comprenant les étapes consistant à : recevoir des données issues d'enregistrements du vol d'un aéronef ; lesdites données comprenant des données issues de capteurs et/ou des données issues de l'avionique embarquée ; déterminer l'état avion à un point N à partir des données reçues ; déterminer l'état de l'avion au point N+1 à partir de l'état de l'avion au point N, par application d'un modèle appris par apprentissage automatique. Dans ce mode de réalisation, l'apprentissage est effectué de bout en bout, i.e. comprend l'étape PERFDB (calcul des performances) et l'étape calcul de trajectoire TRAJ/PRED: les données en sortie sont déterminées directement par l'apprentissage mis en œuvre sur les données d'entrée.

Selon l'invention, l'étape consistant à déterminer l'état de l'avion au point N+1 à partir de l'état de l'avion au point N comprend les étapes consistant à : déterminer les paramètres de vol SEP, FF et N1 à partir de l'état avion au point N, par application d'un modèle appris par apprentissage automatique; et déterminer l'état avion au point N+1 à partir des valeurs des paramètres de vol SEP, FF et N1 par calcul de trajectoire; dans lequel la valeur SEP désigne l'énergie disponible pour la montée de l'aéronef, la valeur FF désigne la variation de la masse de carburant et la valeur N1 désigne la vitesse de rotation du premier étage du moteur influençant la consommation de carburant.

Dans un mode de réalisation, l'apprentissage automatique est non-supervisé. L'apprentissage non-supervisé vise à trouver des structures sous-jacentes à partir de données non étiquetées (ou non annotées). Le nombre et la définition des classes ne sont pas donnés a priori. Ce type d'apprentissage comprend par exemple des apprentissages profonds. Les avantages associés de ce type d'apprentissage comprennent l'utilisation de fortes puissances de calcul sur des données accumulées volumineuses, l'absence de besoin de pilotage humain, la découverte de schémas ou patterns ou liens qui ne sont pas nécessairement compréhensibles par l'homme mais qui peuvent être efficaces.

Dans un mode de réalisation, l'apprentissage automatique est supervisé. Avantageusement, certains attributs des données peuvent être connus e.g. SEP, N1 ou FF. Les sorties attendues sont connues, les classes ou catégories des enregistrements sont connus (étiquettes, labels). L'apprentissage supervisé permet les interventions manuelles et donc peut produire des modèles efficaces, par exemple convergeant plus rapidement. A contrario, les présupposés humains peuvent réduire l'espace des possibles (non contraint dans le cas non-supervisé).

Dans un mode de réalisation, l'apprentissage automatique est effectué hors ligne. Les enregistrements peuvent être des enregistrements de vols passés (approches fouille de données). Ce mode de réalisation est avantageux en ce qu'il permet de réutiliser des données existantes (qui sont nombreuses et actuellement sous-utilisées).

Dans un mode de réalisation, l'apprentissage automatique est effectué en ligne. Dans un mode de réalisation, l'apprentissage automatique peut être effectué de manière incrémentale ou en ligne. D'un modèle générique (type ou série d'avion) connu en moyenne, un avion particulier peut être caractérisé, progressivement affiné, au fur et à mesure de ses propres vols (par numéro de série ou immatriculation ou « tail number »). *Quand le modèle est connu, il est possible de poursuivre l'apprentissage en flux de données (pour améliorer le modèle existant, sans repartir de zéro). Un apprentissage automatique hors ligne apprend sur un ensemble de données complet tandis qu'un apprentissage en ligne peut continuer d'apprendre (« learning transfert »), de manière embarquée, sans avoir à ré-ingérer les données de départ.*

Il convient de noter que l'apprentissage automatique mis en œuvre dans le procédé selon l'invention peut comprendre les deux types d'apprentissage : l'apprentissage hors ligne permet par exemple de paramétrer le modèle générique d'avion et l'apprentissage en ligne permet ensuite de paramétrer le modèle qui est unique à chaque avion particulier. (Mais l'apprentissage hors ligne peut aussi servir à spécifier un avion précis.) Il est également possible de n'utiliser qu'un seul type d'apprentissage (une compagnie aérienne peut vouloir s'intéresser seulement à la classe d'avion, tandis qu'une autre compagnie aérienne souhaitera connaître les caractéristiques précises d'un avion donné, par exemple pour optimiser finement la consommation de carburant).

Dans un mode de réalisation, l'apprentissage automatique comprend un ou plusieurs algorithmes sélectionné parmi les algorithmes comprenant: des machines à vecteur de support ou des séparateurs à vaste marge; des classifieurs; des réseaux de neurones; des arbres de décision et/ou des étapes de méthodes statistiques comme le modèle de mixture gaussienne, la régression logistique, l'analyse discriminante linéaire et/ou des algorithmes génétiques.

Il est décrit un produit programme d'ordinateur, ledit programme d'ordinateur comprenant des instructions de code permettant d'effectuer une ou plusieurs des étapes du procédé, lorsque ledit programme est exécuté sur un ordinateur.

Il est décrit un système pour la mise en œuvre d'une ou de plusieurs des étapes du procédé, le système comprenant un ou plusieurs systèmes avioniques de type avionique de type Flight Management System FMS et/ou sacoche de vol électronique EFB.

Dans un mode de réalisation, le système comprend en outre un ou plusieurs réseaux de neurones, choisis parmi les réseaux de neurones comprenant : un réseau de neurones artificiels ; un réseau de neurones artificiels acyclique ; un réseau de neurones récurrents ; un réseau de neurones à propagation avant ; un réseau neuronal convolutif ; et/ou un réseau de neurones antagonistes génératifs.

Avantageusement, les procédés selon l'invention permettent de prédire les performances des aéronefs, et ce indépendamment des modèles fournis par les constructeurs.

Avantageusement, les procédés selon l'invention permettent la poursuite de l'apprentissage sans limite de temps (e.g. apprentissage online, notamment par renforcement, en utilisant les flux de données issus d'enregistrements de vols commerciaux).

Avantageusement, le procédé selon l'invention peut être implémenté dans des systèmes embarqués de calcul et/ou de prédiction de trajectoires, et notamment dans des sacs de vol électroniques de type EFB (« Electronic Flight bag »). L'invention peut être implémentée dans un calculateur de type FMS (« Flight Management System ») ou dans un ensemble de systèmes interconnectant le FMS avec un ou plusieurs EFB.

Les applications potentielles de l'invention concernent le calcul de trajectoires, l'assistance à un avionneur pour l'établissement des performances avions, l'optimisation des opérations aériennes d'une compagnie, la simulation de vol, l'aide à la gestion de mission, l'assistance au pilotage d'un aéronef, la mise au point de systèmes avioniques au sens large ou encore de la maintenance prédictive en modélisant l'évolution de la performance de l'aéronef.

**Description des figures**

Différents aspects et avantages de l'invention vont apparaitre en appui de la description d'un mode préféré d'implémentation de l'invention mais non limitatif, avec référence aux figures ci-dessous :

La [fig.1] illustre certains des objectifs techniques poursuivis par l'invention ;

La [fig.2] illustre les liens entre le modèle de performance et le calcul prédictif de trajectoire ;

La [fig.3] illustre le couplage entre apprentissage automatique et intégration dans la prédiction de trajectoire;

La [fig.4] illustre certains aspects de l'invention selon une chaine de traitement spécifique ;

La [fig.5] illustre différents modes d'apprentissage selon différents modes de réalisation de l'invention.

## Description détaillée de l'invention

Différents types d'apprentissage automatique (ou machine) sont possibles. L'apprentissage automatique est un domaine de l'informatique qui utilise des techniques statistiques pour donner aux systèmes informatiques la possibilité "d'apprendre" avec des données (par exemple, pour améliorer progressivement les performances d'une tâche spécifique), et ce sans être explicitement programmé à cette fin.

L'apprentissage automatique est utile pour la détection et la reconnaissance des motifs ou schémas ou patterns. Il est généralement plus facile de collecter les données (par exemple, les données d'un jeu vidéo ou de société) que d'écrire explicitement le programme qui régit le jeu considéré. De plus, des réseaux de neurones (réalisation matérielle de l'apprentissage automatique, ou émulation logicielle) peuvent être réutilisés pour traiter de nouvelles données. L'apprentissage automatique peut être effectué sur des données particulièrement volumineuses, c'est-à-dire en utilisant autant de données que possible (e.g. stabilité, convergence, signaux faibles, etc). De nouvelles données peuvent être ajoutées en permanence et l'apprentissage peut être affiné.

Différents algorithmes d'apprentissage peuvent être utilisés, en combinaison avec les caractéristiques selon l'invention. Le procédé peut comprendre un ou plusieurs algorithmes parmi les algorithmes comprenant: les "machines à vecteur de support" ou "séparateurs à vaste marge" (en anglais « Support Vector Machine », acronyme SVM) ; le « boosting » (classifieurs); les réseaux de neurones (en apprentissage non-supervisé) ; les arbres de décision ("Random Forest"), les méthodes statistiques comme le modèle de mixture gaussienne ; la régression logistique ; l'analyse discriminante linéaire ; et les algorithmes génétiques.

Les tâches d'apprentissage automatique sont généralement classées en deux grandes catégories, selon qu'il existe un "signal" ou des entrées d'apprentissage ou des "retours d'information" ou sorties disponibles ».

L'expression « apprentissage supervisé" désigne une situation dans laquelle il est présenté à l'ordinateur des exemples d'entrées et des exemples de sorties (réelles ou souhaitées). L'apprentissage consiste alors en l'identification d'un entrelacs de règles fait correspondre les entrées aux sorties (ces règles peuvent être compréhensibles ou non pour l'homme).

L'expression «apprentissage semi-supervisé» désigne une situation dans laquelle l'ordinateur ne reçoit qu'un ensemble de données incomplet: par exemple il existe des données de sortie manquantes.

L'expression « apprentissage par renforcement» consiste à apprendre les actions à prendre, à partir d'expériences, de façon à optimiser une récompense quantitative au cours du temps. Au travers d'expériences itérées, un comportement décisionnel (appelé stratégie ou politique, qui est une fonction associant à l'état courant l'action à exécuter) est déterminé comme étant optimal, en ce qu'il maximise la somme des récompenses au cours du temps.

L'expression «apprentissage non-supervisé» (également appelé apprentissage approfondi ou apprentissage profond) désigne une situation dans laquelle aucune annotation n'existe (pas de libellé, pas de description, etc), laissant l'algorithme d'apprentissage seul pour trouver une ou plusieurs structures, entre entrées et sorties. L'apprentissage non-supervisé peut être un objectif en soi (découverte de structures cachées dans les données) ou un moyen de parvenir à un objectif (apprentissage par les fonctionnalités).

En informatique, un « algorithme en ligne » (ou « algorithme online »), est un algorithme qui reçoit son entrée non pas en une seule fois, mais comme un flux de données, et qui doit prendre des décisions au fur et à mesure. Dans le cadre de l'apprentissage automatique, il est possible d'utiliser la terminologie d' « algorithme d'apprentissage incrémental ».

Ne connaissant pas l'intégralité des données, un algorithme d'apprentissage incrémental doit faire des choix qui peuvent s'avérer non optimaux *a posteriori*. Il est possible de réaliser des analyses compétitives en comparant la performance, sur les mêmes données, de l'algorithme d'apprentissage incrémental et de l'équivalent ayant à disposition l'intégralité des données. Les algorithmes online comprennent notamment des algorithmes dénommés K server, Balance2, Balance-Slack, Double Coverage, Equipoise, Handicap, Harmonic, Random-Slack, Tight Span Algorithm, Tree Algorithm et Work Function Algorithm. Les algorithmes en ligne ont des liens avec les algorithmes probabilistes et approchés.

Selon les modes de réalisation, la contribution humaine dans les étapes d'apprentissage automatique peut varier. Dans certains modes de réalisation, l'apprentissage automatique est appliqué à l'apprentissage automatique lui-même (réflexif). L'ensemble du processus d'apprentissage peut en effet être automatisé, notamment en utilisant plusieurs modèles et en comparant les résultats produits par ces modèles. Dans la plupart des cas, les humains participent à l'apprentissage automatique («*human in the loop*»). Les développeurs ou curateurs sont responsables de la maintenance des amas de données: ingestion de données, nettoyage des données, découverte de modèles etc. Dans certains cas, l'homme n'a pas à intervenir, l'apprentissage est entièrement automatique une fois les données mises à disposition.

L'apprentissage automatique utilisé en combinaison avec les caractéristiques selon l'invention bénéficie généralement du fait de disposer de grandes quantités de données. L'expression anglaise "Big data" désigne la collecte et l'analyse de données, effectuées de manière massive. Ce concept est associé avec des caractéristiques de nature technique qui comprennent: le *volume* (e.g. grandes collections de données, même si elles sont redondantes), la *variété* (e.g. de nombreuses sources différentes sont utilisées), la *vélocité* (e.g. les données sont « fraiches » ou constamment mises à jour dans des environnements changeants ou dynamiques), attestant d'une certaine *véracité* (e.g. les signaux faibles qui sont noyés dans le bruit ne sont pas supprimés et peuvent par suite être détectés ou amplifiés), pour représenter in fine une certaine *valeur* (par exemple d'utilité du point de vue technique et/ou métier i.e. business).

Dans un mode de réalisation, une méthode d'apprentissage « sur politique » peut être utilisée. Les méthodes sur politique sont des méthodes itératives alternant des phases d'évaluation et d'amélioration de la politique. Elles se fondent sur l'estimation courante de la fonction valeur (respectivement de qualité) en l'état courant pour déterminer le choix de la prochaine action (contrôle), après observation du nouvel état courant et du signal de renforcement reçu, le modèle qui a été employé est mis à jour. Un exemple classique de ce type de méthode est l'algorithme SARSA.

Dans un mode de réalisation, une méthode d'apprentissage « hors politique » peut être utilisée. Les méthodes hors politique ne sont quant à elles pas sensibles à la manière dont les actions sont sélectionnées à chaque instant mais seulement au fait d'observer une politique de contrôle présentant un niveau d'exploration suffisant. De ce fait elles peuvent librement observer une politique de contrôle différente (pouvant être sous-optimale). Un exemple classique d'algorithme hors politique est l'algorithme Q-learning.

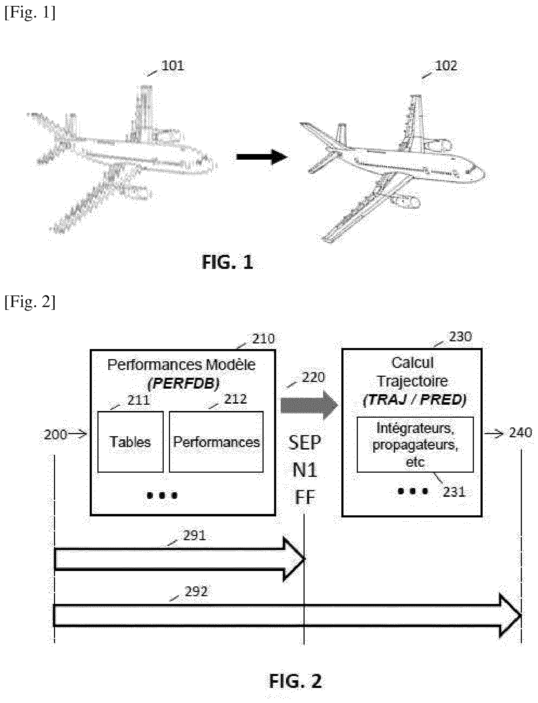

La [fig.1] illustre certains des objectifs techniques poursuivis par l'invention.

En matière d'optimisation, il est d'usage d'utiliser des modèles fournis par les constructeurs 101. Ceux-ci sont généralement génériques i.e. théoriques, statiques et pauvres en données. Ils concernent un appareil « moyen » ou « idéalisé », difficile à manipuler ou finalement peu pertinent dans certains contextes. En d'autres termes, il existe un besoin pour des modèles avion avancés 102 qui soient « réels » i.e. individualisés (appareil par appareil), dynamiques et fondés sur de grandes quantités de données (lesquelles sont par ailleurs justement accessibles).

Plus en détail, il est avantageux de pouvoir spécifier les performances d'un appareil en particulier, de manière individualisée, notamment en matière d'optimisation (par exemple pour la consommation de carburant). Suivant les événements de maintenance effectués sur un appareil, ou selon les missions (e.g. répartition du chargement, etc), ces données de performances peuvent varier pour un même appareil (sollicitations différentes, aspect dynamique).

Pouvoir évaluer *en temps réel*, de manière embarquée ou via un calcul à distance, les performances instantanées d'un aéronef confère un avantage significatif à une compagnie aérienne, qui doit gérer une flotte d'appareils.

Les modes de réalisation de l'invention décrits ci-après répondent au moins partiellement aux besoins énoncés ci-dessus.

La [fig.2] illustre les liens entre le modèle de performance et le calcul prédictif de trajectoire.

Une trajectoire comprend une pluralité de points, parmi lesquels les points N et N+1 (points de trajectoires, en correspondance avec des points de plan de vol, points de passage).

Le modèle de performances 210 (dit PERFDB) détermine l'état avion ; il comprend des tables 211 et un ou plusieurs calculateurs de performances 212. Les tables 211 peuvent être estimées (estimation de paramètres d'un modèle paramétrique à partir de vols réels).

Les données issues de capteurs ou de l'avionique 200 (e.g. état avion au point N) sont manipulées, en entrée. En sortie, les paramètres SEP, N1, FF (220) sont déterminés (directement ou indirectement), audit point N.

Ces paramètres de sortie 220 sont ensuite utilisés dans le modèle de calcul de trajectoires 230 (intégrateurs et propagateurs 231, etc) qui prédit l'état futur (ou suivant) 240 de l'avion à partir d'un état présent (ou précédent)

Etat avion

L'état de l'aéronef - à un instant donné - peut en effet se caractériser (de manière approximée mais satisfaisante) par trois paramètres que sont les paramètres SEP, FF et N1. Ces paramètres sont des données mesurables par les capteurs des aéronefs, et sont donc accessibles dans les enregistrements de vols

L'acronyme SEP, pour *Specific Excess Power,* désigne l'énergie disponible pour la montée de l'aéronef, i.e. la capacité de monter de l'avion divisé par la masse (ce paramètre n'est pas constant). La SEP n'est pas mesurée directement, mais elle se calcule à partir de données mesurables (comme l'altitude, la vitesse, la constante de gravitation, etc).

L'acronyme FF pour *Fuel Flow* désigne la variation de la masse de carburant.

$$[\text{Math.1}]$$

$$FF = -\frac{dm}{dt}$$

L'acronyme N1 fait référence à la vitesse de rotation du premier étage du moteur, celui qui influe le plus sur la consommation de carburant. La puissance disponible est très liée à cette vitesse N1.

Les paramètres SEP, FF et N1 sont étroitement liés. En particulier, le mode de poussée du moteur et le guidage vertical s'avèrent être déterminant pour les paramètres SEP, FF et N1.

Une approche (« model-based » en anglais) peut consister à *modéliser* l'interdépendance entre SEP, FF et N1, i.e. en formulant des jeux équations faisant intervenir ces paramètres (par exemple en modélisant l'aérodynamique et/ou le mode de poussée moteur et/ou le guidage vertical). Des optimisations particulièrement efficaces (e.g. convergentes et rapides) peuvent être ainsi obtenues.

Approches sans modèle, fondées sur l'apprentissage automatique.

Selon un mode de réalisation de l'invention, une alternative avantageuse (« model-free » en anglais) consiste à appliquer des méthodes d'apprentissage automatique. Aucune connaissance *a priori* n'est requise. En d'autres termes, il peut n'être présupposé *aucun* modèle, qu'il soit aérodynamique ou moteur, ou autre: l'apprentissage automatique établit des correspondances entre jeux de données en entrée et en sortie, ces données étant des données réelles (car mesurées directement ou déterminées indirectement).

Divers procédés d'apprentissage automatique peuvent être appliqués, et ce à différents niveaux : entre 200 et 220 d'une part (apprentissage automatique 291), et entre 200 et 240 d'autre part (apprentissage automatique 292).

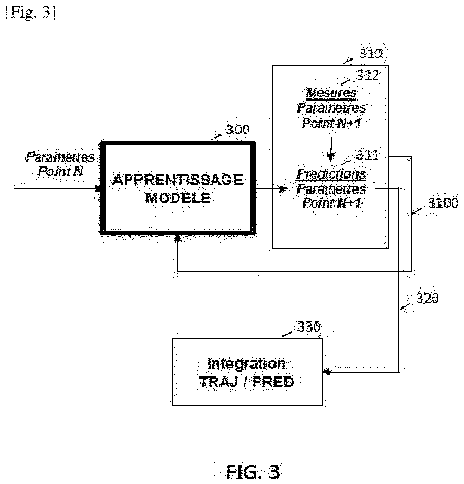

La [fig.3] illustre le couplage entre apprentissage automatique et intégration dans la prédiction de trajectoire.

Le calcul d'intégration 330 pour prédire la trajectoire de l'aéronef ne porte que sur les paramètres prédits au point N+1 311, obtenus par apprentissage 300 à partir du point N. Les données prédites 311 et mesurées 312 servent à poursuivre l'entrainement 3100 du modèle 300.

Le modèle de performances 210 (dit PERFDB) détermine l'état avion ; il comprend des tables 211 et un ou plusieurs calculateurs de performances 212. Les tables 211 peuvent être estimées (estimation de paramètres d'un modèle paramétrique à partir de vols réels).

En entrée sont manipulées des données issues de capteurs et/ou de l'avionique. En sortie, les paramètres SEP, N1, FF 220 sont déterminés (directement ou indirectement).

Dans un mode de réalisation de l'invention, ces paramètres de sortie sont utilisés dans le modèle de calcul de trajectoires 230 (intégrateurs et propagateurs 231, etc) qui prédit l'état futur (ou suivant) de l'avion à partir d'un état présent (ou précédent)

Les paramètres de vol à un point N sont reçus (mesurés et/ou calculés) puis soumis au module d'apprentissage lequel :

- a traité les données en batch (apprentissage non supervisé sur un amas de données) ou bien

- traite les données en flux (apprentissage incrémental ou en ligne voir *infra*)

Dans un mode de réalisation, les données d'entrée (inputs) sont reçues et/ou fournies, ainsi que les données de sorties (outputs). Un apprentissage automatique est effectué sur les données de sortie et l'apprentissage établit alors les « liens » entre entrées et sorties.

Dans un mode de réalisation (« différentiel »), les différences entre les données prédites par apprentissage et les données réellement mesurées en vol modifient éventuellement le modèle appris. Les données prédites et/ou les données mesurées sont manipulées par les calculateurs de vol.

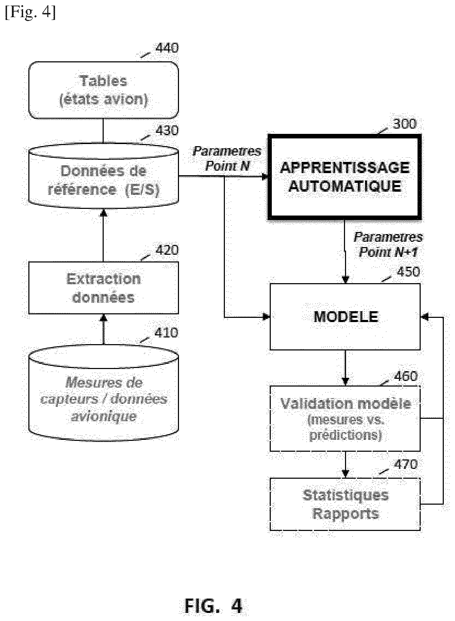

La [fig.4] illustre certains aspects de l'invention selon une chaine de traitement spécifique.

Les mesures de capteurs et/ou des calculs et/ou d'autres observations sont collectées à l'étape 410, éventuellement filtrées et formatées à l'étape 420 ; un corpus (réduit) i.e. référence est défini à l'étape 430 (rétroactions par expertise humaine et/ou filtrage machine) et des tables d'états avion 440 comprenant une pluralité d'états avions sont déterminées. En considérant un état avion particulier, le module d'apprentissage 300 prédit un état avion au point suivant N+1 à partir de données au point précédent N. Le modèle appris 450 est progressivement et/ou itérativement affiné, éventuellement validé ou modifié 460 par un opérateur, et peut optionnellement faire l'objet de rapports et de statistiques 470 (pour les autorités de certification, les autorités de régulation du trafic, le constructeur, un équipementier, etc).

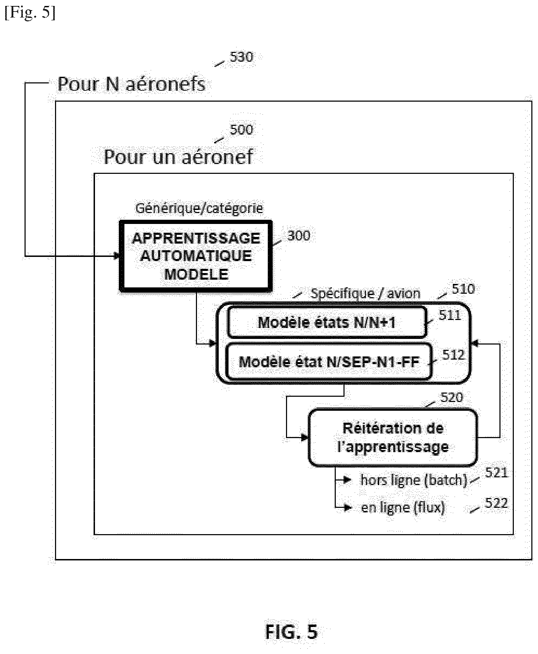

La [fig.5] illustre différents modes d'apprentissage selon différents modes de réalisation de l'invention.

Dans un mode de réalisation, pour un aéronef donné 500 dont on souhaite mieux connaître les propriétés (e.g. pour déterminer son comportement en vol), le procédé comprend une première étape 512 consistant à *modéliser le lien entre (i) l'état de l'aéronef d'une part et (ii) les paramètres (SEP, FF, N1) d'autre part*. A cette fin, le modèle est entrainé par apprentissage automatique sur un grand nombre d'enregistrements de vols concernant le type d'aéronef concerné. Dans une seconde étape, le modèle est embarqué (i.e. implémentation à bord) et affiné pour l'affiner ou le renforcer ou l'améliorer par numéro de série, i.e. de manière spécifique ou particulière à l'aéronef considéré (chaque appareil est unique, légèrement différent des autres appareils dans une même catégorie ou type d'appareil). A cette fin, le modèle (générique) est spécifié par apprentissage automatique effectué sur les données de vols spécifiques à l'aéronef considéré. Les données peuvent être des enregistrements de vol (passés) de cet aéronef (hors ligne 521) ou bien reçues en direct, en flux ou en streaming (en ligne 522).

Ce dernier mode de réalisation est une modélisation « de bout en bout » : un modèle d'apprentissage 300 (type réseau de neurones par exemple) est entrainé avec comme entrée l'état avion, et comme sortie la SEP, le FF et N1. Par suite, les intégrateurs (existants) sont exploités avec les sorties de ce modèle, afin de prédire l'état futur de l'aéronef.

Ce qui est appris sur un aéronef 520, peut être réitéré à l'échelle d'une flotte d'appareils 530. Il est alors possible de faire correspondre le modèle générique avec une moyenne effectuée sur des appareils de même type.

Dans un mode de réalisation, pour un aéronef donné 500 dont on souhaite mieux connaître les propriétés (pour déterminer son comportement en vol), le procédé comprend une première étape 511 consistant à *modéliser le lien entre (i) l'état de l'aéronef au point N d'une part et (ii) l'état de l'aéronef au point N+1 d'autre part.* Cette étape comprend une étape consistant à utiliser l'intégration/prédiction de trajectoire 230. A cette fin, le modèle est entrainé par apprentissage automatique sur un grand nombre d'enregistrements de vols concernant le type d'aéronef concerné. Dans une seconde étape, le modèle est embarqué (i.e. implémentation à bord) et affiné pour l'affiner ou le renforcer ou l'améliorer par numéro de série, i.e. de manière spécifique ou particulière à l'aéronef considéré (chaque appareil est unique, légèrement différent des autres appareils dans une même catégorie ou type d'appareil). A cette fin, le modèle (générique) est spécifié par apprentissage automatique effectué sur les données de vols spécifiques à l'aéronef considéré. Les données peuvent être des enregistrements de vol (passés) de cet aéronef (hors ligne 521) ou bien reçues en direct, en flux ou en streaming (en ligne 522).

La présente invention peut s'implémenter à partir d'éléments matériel et/ou logiciel. Elle peut être disponible en tant que produit programme d'ordinateur sur un support lisible par ordinateur.

L'apprentissage automatique peut correspondre à des architectures matérielles qui sont émulables ou simulables par ordinateur (e.g. CPU-GPU), mais parfois non (des circuits dédiés à l'apprentissage peuvent exister).

Selon les modes de réalisation, le procédé selon l'invention peut être mis en œuvre sur ou par un ou plusieurs réseaux de neurones. Un réseau de neurones selon l'invention peut être un ou plusieurs réseaux de neurones choisis parmi les réseaux de neurones comprenant : a) un réseau de neurones artificiels (en anglais « feedforward neural network »; b) un réseau de neurones artificiels acyclique, e.g. un perceptron multicouche, se distinguant ainsi des réseaux de neurones récurrents ; c) un réseau de neurones à propagation avant ; d) un réseau de neurones de *Hopfield* (un modèle de réseau de neurones récurrents à temps discret dont la matrice des connexions est symétrique et nulle sur la diagonale et où la dynamique est asynchrone, un seul neurone étant mis à jour à chaque unité de temps) ; e) un réseau de neurones récurrents (constitué d'unités interconnectées interagissant non-linéairement et pour lequel il existe au moins un cycle dans la structure) ; f) un réseau neuronal convolutif (en anglais « CNN » ou « ConvNet » pour « Convolutional Neural Networks », un type de réseau de neurones artificiels acycliques feedforward, par empilage multicouche de perceptrons) ou g) un réseau antagonistes génératifs (en anglais « *generative adversarial networks* » acronymes GANs, classe d'algorithmes d'apprentissage non-supervisé)

Dans un mode de réalisation, les calculs d'apprentissage sont effectués hors ligne sur un calculateur au sol.

Avantageusement, si le calculateur se trouve à bord d'un aéronef et a accès aux données de vol, le modèle peut être entrainé spécifiquement pour modéliser avec plus de précision l'aéronef particulier l'embarquant, par des méthodes de renforcement.

Avantageusement, si le calculateur se trouve à bord d'un aéronef et est connecté à un enregistreur de paramètres, les données de vol peuvent être utilisées dans une architecture temps réel pour améliorer la connaissance des performances avion en temps réel.

Dans une variante de réalisation, une ou plusieurs étapes du procédé selon l'invention sont mises en œuvre sous forme de programme d'ordinateur hébergé sur un ordinateur portable de type « EFB » (acronyme d'« Electronic Flight Bag).

Dans une variante de réalisation, une ou plusieurs étapes du procédé peuvent être mises en œuvre au sein d'un calculateur de type « FMS » (acronyme de « Flight Management System ») ou dans une fonction FM d'un calculateur de vol.

## Revendications

1. Procédé pour la gestion du vol d'un aéronef, comprenant les étapes consistant à :

   - recevoir des données (200) issues d'enregistrements du vol d'un aéronef ; lesdites données comprenant des données issues de capteurs et/ou des données issues de l'avionique embarquée ;
   - déterminer l'état avion à un point N (220) à partir des données reçues (200);
   - déterminer l'état de l'avion au point N+1 (240) à partir de l'état de l'avion au point N (220), par application d'un modèle appris par apprentissage automatique (292) ; le procédé étant **caractérisé en ce que** l'étape consistant à déterminer l'état de l'avion au point N+1 à partir de l'état de l'avion au point N comprend les étapes consistant à :

      - déterminer les paramètres de vol SEP, FF et N1 à partir de l'état avion au point N, par application d'un modèle appris par apprentissage automatique (291) ; et
      - déterminer l'état avion au point N+1 (240) à partir des valeurs des paramètres de vol SEP, FF et N1, par calcul de trajectoire (230);

   où la valeur SEP désigne l'énergie disponible pour la montée de l'aéronef, la valeur FF désigne la variation de la masse de carburant et la valeur N1 désigne la vitesse de rotation du premier étage du moteur influençant la consommation de carburant.

2. Procédé selon la revendication 1, l'apprentissage automatique (291, 293) étant non-supervisé.

3. Procédé selon la revendication 1, l'apprentissage automatique étant supervisé.

4. Procédé selon l'une quelconque des revendications précédentes, l'apprentissage automatique étant effectué hors ligne.

5. Procédé selon l'une quelconque des revendications 1 à 3, l'apprentissage automatique étant effectué en ligne.

6. Procédé selon l'une quelconque des revendications précédentes, l'apprentissage automatique comprenant un ou plusieurs algorithmes sélectionné parmi les algorithmes comprenant: des machines à vecteur de support ou des séparateurs à vaste marge; des classifieurs; des réseaux de neurones; des arbres de décision et/ou des étapes de méthodes statistiques comme le modèle de mixture gaussienne, la régression logistique, l'analyse discriminante linéaire et/ou des algorithmes génétiques.

7. Produit programme d'ordinateur, ledit programme d'ordinateur comprenant des instructions de code permettant d'effectuer les étapes du procédé selon l'une quelconque des revendications 1 à 6, lorsque ledit programme est exécuté sur un ordinateur.

8. Système pour la mise en œuvre des étapes du procédé selon l'une quelconque des revendications 1 à 6, le système comprenant un ou plusieurs systèmes avioniques de type avionique de type Flight Management System FMS et/ou sacoche de vol électronique EFB.

9. Système selon la revendication 8, comprenant en outre un ou plusieurs réseaux de neurones, choisis parmi les réseaux de neurones comprenant : un réseau de neurones artificiels ; un réseau de neurones artificiels acyclique ; un réseau de neurones récurrents ; un réseau de neurones à propagation avant ; un réseau neuronal convolutif ; et/ou un réseau de neurones antagonistes génératifs.

**Patentansprüche**

1. Verfahren zur Steuerung des Flugs eines Luftfahrzeugs, umfassend:

    - das Empfangen von Daten (200) aus Aufzeichnungen des Flugs eines Luftfahrzeugs, wobei die Daten Daten von Sensoren und/oder Daten von der Bordavionik umfassen;
- das Bestimmen des Flugzeugstatus zu einem Punkt N (220) aus den empfangenen Daten (200);
- das Bestimmen des Flugzeugstatus zum Punkt N+1 (240) aus dem Flugzeugstatus zum Punkt N (220) durch Anwendung eines durch maschinelles Lernen gelernten Modells (292);
wobei das Verfahren **dadurch gekennzeichnet, dass** der Schritt, der aus dem Bestimmen des Flugzeugstatus zum Punkt N+1 aus dem Flugzeugstatus zum Punkt N besteht, die Schritte umfasst, bestehend aus:

    - Bestimmen der Flugparameter SEP, FF und N1 aus dem Flugzeugstatus zum Punkt N durch Anwendung eines durch maschinelles Lernen gelernten Modells (291); und
    - Bestimmen des Flugzeugstatus zum Punkt N+1 (240) aus Werten der Flugparameter SEP, FF und N1 durch Berechnung der Flugbahn (230);

wobei der Wert SEP die für den Steigflug des Luftfahrzeugs verfügbare Energie bezeichnet, der Wert FF die Variation des Treibstoffgewichts bezeichnet und der Wert N1 die Drehzahl der ersten Stufe des Motors bezeichnet, die sich auf den Treibstoffverbrauch auswirkt.

2. Verfahren nach Anspruch 1, wobei das maschinelle Lernen (291, 293) unüberwacht ist.

3. Verfahren nach Anspruch 1, wobei das maschinelle Lernen überwacht ist.

4. Verfahren nach einem der vorhergehenden Ansprüche, wobei das maschinelle Lernen offline durchgeführt wird.

5. Verfahren nach einem der Ansprüche 1 bis 3, wobei das maschinelle Lernen online durchgeführt wird.

6. Verfahren nach einem der vorhergehenden Ansprüche, wobei das maschinelle Lernen einen oder mehrere Algorithmen umfasst, die ausgewählt sind aus den Algorithmen umfassend: Support Vector Machines oder Wide Margin Separators; Klassifikatoren; neuronale Netze; Entscheidungsbäume und/oder Schritte von statistischen Methoden, wie das Gaußsche Mischverteilungsmodell, die logistische Regression, die lineare Diskriminanzanalyse und/oder die genetischen Algorithmen.

7. Computerprogrammprodukt, wobei das Computerprogramm Codeanweisungen zum Durchführen der Schritte des Verfahrens nach einem der Ansprüche 1 bis 6 umfasst, wenn das Programm auf einem Computer ausgeführt wird.

8. System zur Implementierung der Schritte des Verfahrens nach einem der Ansprüche 1 bis 6, wobei das System ein oder mehrere Avioniksystem vom Avioniktyp vom Typ des Flight Management System FMS und/oder einer elektronischen Flugtasche EFB umfasst.

9. System nach Anspruch 8, ferner umfassend ein oder mehrere neuronale Netze, die aus den neuronalen Netzen ausgewählt sind, umfassend: ein künstliches neuronales Netz; ein acyclisches künstliches neuronales Netz; ein rekurrentes neuronales Netz; ein vorwärts gerichtetes neuronales Netz; ein faltendes neuronales Netz und/oder ein generatives antagonistisches neuronales Netz.

**Claims**

1. A method for managing the flight of an aircraft, comprising:

    - receiving data (200) from recordings of the flight of an aircraft; said data comprising data from sensors and/or data from the onboard avionics;
    - determining the aircraft state at a point N (220) on the basis of the received data (200);
    - determining the state of the aircraft at point N+1 (240) on the basis of the state of the aircraft at point N (220) by applying a model learnt by machine learning (292);
    the method being **characterised in that** the step of determining the state of the aircraft at point N+1 on the basis of the state of the aircraft at point N comprising the steps of:

        - determining the flight parameters SEP, FF and N1 on the basis of the aircraft state at point N, by applying a model learnt by machine learning (291); and
        - determining the aircraft state at point N+1 (240) on the basis of the values of flight parameters SEP, FF and N1, by means of trajectory calculation (230);

    where the SEP value denotes the energy available for the aircraft to climb, the FF value denotes the variation in fuel weight and the N1 value denotes the speed of rotation of the first stage of the engine, which influences fuel consumption.

2. The method according to claim 1, the machine learning (291, 293) being unsupervised.

3. The method according to claim 1, the machine learning being supervised.

4. The method according to any one of the preceding claims, the machine learning being performed offline.

5. The method according to any one of claims 1 to 3, the machine learning being performed online.

6. The method according to any one of the preceding claims, the machine learning comprising one or more algorithms selected from the algorithms comprising: support-vector machines or wide margin separators; classifiers; neural networks; decision trees and/or steps from statistical methods such as the Gaussian mixture model, logistic regression, linear discriminant analysis and/or genetic algorithms.

7. A computer program product, said computer program comprising code instructions for performing the steps of the method according to any one of claims 1 to 6 when said program is executed on a computer.

8. A system for implementing the steps of the method according to any one of claims 1 to 6, the system comprising one or more avonics-type avionic systems of the flight management system FMS and/or an electronic flight bag EFB type.

9. The system according to claim 8, further comprising one or more neural networks chosen from the neural networks comprising: an artificial neural network; an acyclic artificial neural network; a recurrent neural network; a feedforward neural network; a convolutional neural network; and/or a generative adversarial neural network.

[Fig. 1]

FIG. 1

[Fig. 2]

FIG. 2

[Fig. 3]

FIG. 3

[Fig. 4]

FIG. 4

[Fig. 5]

**FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017042166 A
- US 9290262 B
- US 9542851 B1, KIM GEUN IL
- US 2018259342 A1, BITRA SURESH KUMAR
- US 2009112535 A1, PHILIPPS JAMES D
- US 2016314692 A1, BAHRAMI ALI